# EUROPEAN PATENT APPLICATION

(11) **EP 4 686 888 A1**
(43) Date of publication of application: **04.02.2026**
(21) Application number: 25193412.1
(22) Date of filing: 01.08.2025
(51) Int. Cl.: F24F 6/00, F24F 13/20

(54) **HUMIDIFIER**

(30) Priority: 02.08.2024 KR 20240103250
(71) Applicant: LG Electronics Inc., Yeongdeungpo-gu Seoul 07336 (KR)
(72) Inventor: KU, Myungjin, Seoul (KR); KEUM, Kyoha, Seoul (KR); LEE, Kunyoung, Seoul (KR); LEE, Donggun, Seoul (KR); JEON, Jihye, Seoul (KR)
(74) Representative: Vossius & Partner Patentanwälte Rechtsanwälte mbB

(57) **Abstract**

The present disclosure relates to a humidifier. The humidifier includes: an inner tank forming a space for storing water and having a bottom hole formed through a bottom surface thereof; an outer tank forming a space for receiving from the inner tank; a humidification module that generates humidified air using water supplied from the inner tank; and a connector for sending the water stored in the inner tank to the humidification module. The connector includes: a connector body penetrating the bottom hole of the inner tank ; and a connector holder connected to the connector body below the inner tank. A through-hole is formed in a bottom surface of the outer tank, in which the connector holder is disposed. An outer sealer contacting the outer tank is disposed on an outer circumferential surface of the connector holder.

## Description

### BACKGROUND OF THE INVENTION

### 1. Field of the invention

The present disclosure relates to a humidifier, and more particularly, to a humidifier including a water softener.

### 2. Description of the Related Art

A humidifier is a device that evaporates water to emit humidified air with a high moisture content.

The humidifier may generate humidified air by evaporating water using natural vaporization, heating vaporization, and ultrasonic vibration.

Each evaporation method has its own merits and demerits. Natural vaporization has a drawback in that a user is required to frequently clean a humidifying medium after use.

In the case of vaporization by ultrasonic vibration which involves atomizing supplied water by ultrasonic vibration, the movement of humidified air into an indoor space can be less active, the use of unsterilized air for humidification can lead to unpleasant humidified air flowing into an indoor space, and an ultrasonic vibrator is sensitive to high-temperature heat.

In the case of heating vaporization, direct discharge of hot humidified air can lead to safety incidents.

Korean Patent Registration No. KR 10-0158806 discloses a humidifier that heats water supplied from a water tank and humidifies air by ultrasonic vibration.

Incidentally, the prior art document discloses a structure in which a water heating space and a humidification space are connected together. This can lead to the problem of incomplete sterilization of water if a water heating temperature is kept below a set temperature in consideration of an ultrasonic vibrator.

Moreover, neither heating nor ultrasonic vibration alone can remove ions contained in water, which may generate humidified air carrying those ions into the indoor space.

### SUMMARY OF THE INVENTION

Therefore, the present disclosure has been made in view of the above problems, and it is an object of the present disclosure to solve the above-described problems and other problems.

Water held in a water tank is moved to a humidification module and used to generate humidified air. However, if the water held in the water tank leaks out to areas other than the humidification module, the water may collect within the humidifier.

Another object of the present disclosure is to provide a humidifier that prevents the water in the water tank from leaking out.

If a discharge passage for humidified air to move along is formed on the outer periphery of the water tank, or if the humidified air moving along the discharge passage leaks out to a space other than the discharge passage, water may collect within the humidifier.

Another object of the present disclosure is to provide a humidifier that prevents humidified air from flowing out to areas other than the discharge passage.

Using a double-layer water tank design can lead to condensation between the water tanks. Also, moisture may enter a space between a plurality of water tanks. However, if the space between the plurality of water tanks is a sealed space, moisture or condensation may form inside the space, which can cause problems.

Another object of the present disclosure is to provide a humidifier in which a space between a plurality of water tanks is sealed.

An embodiment of the present disclosure provides a humidifier including: an inner tank forming a space for storing water and having a bottom hole formed through a bottom surface thereof; and an outer tank forming a space for receiving from the inner tank. The humidifier includes: a humidification module that generates humidified air using water supplied from the inner tank; and a connector for sending the water stored in the inner tank to the humidification module,

The connector includes a connector body penetrating the bottom hole of the inner tank and a connector holder connected to the connector body below the inner tank. A through-hole is formed in a bottom surface of the outer tank, in which the connector holder is disposed. An outer sealer contacting the outer tank is disposed on an outer circumferential surface of the connector holder.

The outer tank includes a lower rim extending downward around the through-hole. The outer sealer contacts the lower rim.

The outer tank includes an inner protrusion protruding inward from an inner circumferential surface of the lower rim. The outer sealer contacts the inner protrusion.

The outer sealer includes: a contact portion disposed in contact with the outer circumferential surface of the connector holder; a protrusion protruding radially outward from an upper end of the contact portion; and a sealing portion bent downward from an outer peripheral end of the protrusion. The sealing portion contacts the outer tank.

A packing is disposed around the bottom hole formed on the bottom surface of the inner tank. The connector body penetrates the bottom hole. The packing contacts one side of the connector body.

The humidifier further includes a water softener positioned within the inner tank.

The connector body includes a connector plate coupled to the water softener and a connector pipe extending downward from the connector plate and penetrating the bottom hole of the inner tank. The connector holder is fitted onto the connector pipe.

The packing contacts a bottom surface of the connector plate.

The packing contacts an upper surface of the connector holder.

The connector holder includes a seating portion which is recessed downwardly from the upper surface. The packing is disposed on the seating portion.

The humidifier further includes an inner shell disposed spaced apart from the outer tank.

A discharge passage is formed between the outer tank and the inner shell, through which humidified air generated from the humidification module flows.

The outer tank includes a lower rim extending downward around the through-hole.

The inner shell includes an upper rim protruding upward around a shell through-hole through which the connector holder penetrates.

The upper rim is positioned inside the lower rim.

The outer tank includes an inner protrusion protruding inward from an inner circumferential surface of the lower rim.

An upper end of the upper rim contacts the inner protrusion.

A bottom recess is formed on a bottom surface of the inner protrusion, recessed upwardly such that an upper end portion of the upper rim is inserted therein.

A tip protruding upward is formed on the upper end portion of the upper rim so as to be inserted in the bottom recess.

An outer circumferential surface of the upper rim contacts the inner circumferential surface of the lower rim.

A water tank sealer that contacts the outer tank is disposed at an upper end portion of the inner tank.

Specific details of other embodiments are included in the detailed description and drawings.

A humidifier of the present disclosure has one or more of the following effects.

First, the outer sealer making contact with the outer tank is positioned around a connector protruding downward from an inner tank. Thus, it is possible to prevent air moving to the outside of the outer tank from flowing to the inner tank.

Moreover, it is possible to prevent the water in the inner tank from flowing to the outside of the outer tank.

Second, it is possible to prevent water from collecting in the space between the inner tank and the outer tank by sealing the space between the inner tank and the outer tank.

The effects of the present disclosure are not limited to the above-mentioned effects, and other effects that are not mentioned may be obviously understood by those skilled in the art from the claims.

### BRIEF DESCRIPTION OF THE DRAWINGS

FIG. 1 is a perspective view of a humidifier according to one embodiment of the present disclosure.
FIG. 2 is a plan view of FIG. 1.
FIG. 3 is a cross-sectional view taken along III-III' of FIG. 2.
FIG. 4 is an exploded perspective view of an inner shell with a water tank placed therein, a supply tube, and an upper cover according to an embodiment of the present disclosure.
FIG. 5 is an exploded perspective view of an inner tank and an outer tank according to an embodiment of the present disclosure.
FIG. 6 is an exploded perspective view of an inner tank, a water softener, and a connector according to an embodiment of the present disclosure.
FIG. 7 is an exploded perspective view of components of a water softener according to an embodiment of the present disclosure.
FIG. 8 is a cross-sectional view of a water softener according to an embodiment of the present disclosure.
FIG. 9 is an exploded perspective view of components of a connector according to an embodiment of the present disclosure.
FIG. 10 is a cross-sectional view of one side of FIG. 9.
FIG. 11 is a perspective view of a connector holder according to a first embodiment of the present disclosure.
FIG. 12 is a cross-sectional view for explaining connections between the connector holder of the first embodiment and its related components.
FIG. 13 is a perspective view of a connector holder according to a second embodiment of the present disclosure.
FIG. 14 is a cross-sectional view for explaining the connections between the connector holder of the second embodiment and its related components.
FIG. 15 is a cross-sectional view of one side of an inner tank with a water softener and a connector connected thereto according to an embodiment of the present disclosure.
FIG. 16 is a cross-sectional view of one side of a water tank, an inner shell, a supply tube, and an upper cover connected together according to an embodiment of the present disclosure.
FIG. 17 is an enlarged view of a portion of FIG. 16.

### DETAILED DESCRIPTION OF THE PREFERRED EMBODIMENTS

Advantages and features of the present disclosure and methods of achieving them will become apparent with reference to the embodiments described below in detail in conjunction with the accompanying drawings. However, the present disclosure is not limited to the embodiments disclosed below, but may be implemented in various different forms, and these embodiments are provided only to allow the disclosure of the present disclosure to be complete, and to completely inform those of ordinary skill in the art to which the present disclosure belongs, the scope of the invention, and the present disclosure is only defined by the scope of the claims. Like reference numerals refer to like elements throughout the specification.

Hereinafter, the present disclosure will be described with reference to the drawings for explaining a humidifier according to embodiments of the present disclosure.

A humidifier of the present disclosure may generate humidified air from water by ultrasonic vibration. A humidifier of the present disclosure may generate humidified air by heating water. A humidifier of the present disclosure may generate humidified air produced by ultrasonic vibration and humidified air produced by heating.

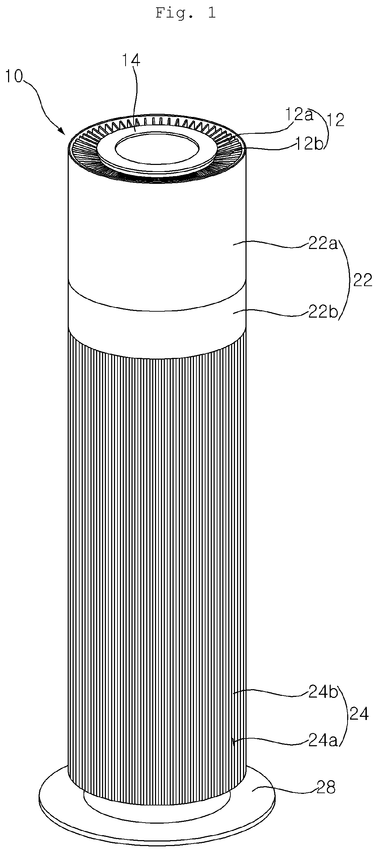

Referring to FIG. 1, an exterior of a humidifier of the present disclosure will be described.

The humidifier includes a casing 10 that forms the exterior, with an inlet 24a and an outlet 12a formed therein.

The casing 10 may have an overall cylindrical shape.

The casing 10 may include an intake grille 24 which forms the inlet 24a through which air is admitted, and a discharge grille 12 which forms the outlet 12a through which air is discharged. The inlet 24a may be formed on a circumferential surface of the casing 10 having a cylindrical shape. The outlet 12a may be formed on a top surface of the casing 10 having a cylindrical shape. The humidifier of the present disclosure may allow air to be admitted through the circumferential surface and be discharged through the top surface.

The intake grille 24 includes a plurality of ribs 24b that extend vertically. The plurality of grilles 24b may be spaced apart in a circumferential direction of the intake grille 24. A plurality of inlets 24a may be formed between the plurality of grilles 24b.

The casing 10 may include a water tank cover 14 positioned on top of the water tank 100.

The humidifier may include a discharge grille 12 forming the outlet 12a and a water tank cover 14 positioned on top of the water tank 100.

The discharge grille 12 may be configured to be separated upward from an outer shell 22 to be described later. The water tank cover 14 may be configured to be separated from the discharge grille 12 or from the water tank 100 to be described later.

The discharge grille 12 may include a plurality of ribs 12b that extend radially from the outer periphery of the water tank cover 14. The plurality of ribs 12b positioned at the discharge grille 12 may be spaced apart circumferentially from the outer periphery of the water tank cover 14.

The casing 10 may include an outer shell 22 for directing the air moving inside it to the outlet 12a.

The outer shell 22 includes an upper outer shell 22a positioned under the discharge grille 12 and a lower outer shell 22b positioned under the upper outer shell 22a. The lower outer shell 22b may be formed of a transparent material.

The humidifier may include a base 28 positioned under the casing 10, which causes the casing 10 to be spaced a certain distance apart from the ground. An upper end portion of the base 28 may be connected to a lower end portion of the casing 10.

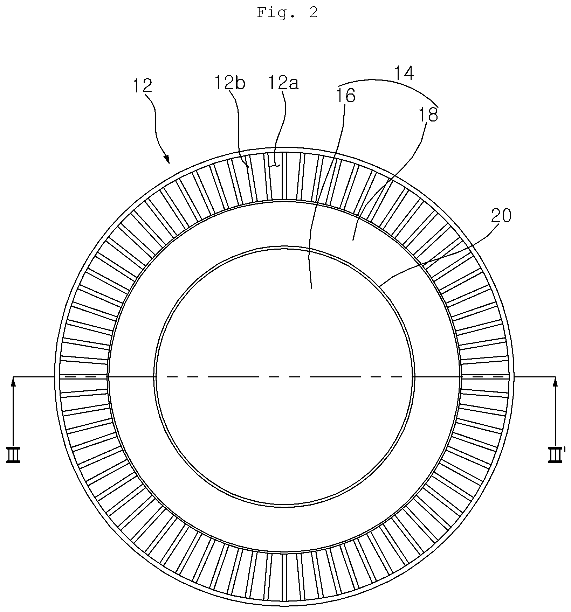

Hereinafter, a top portion of the humidifier will be described with reference to FIG. 2.

The water tank cover 14 may include a central cover 16 and a peripheral cover 18 positioned around the central cover 16. The central cover 16 may bulge upward toward the center. A water supply hole 20 may be formed between the peripheral cover 18 and the central cover 16 to allow water to move into the water tank 100.

A plurality of outlets 12a may be formed between the plurality of ribs 12b positioned at the discharge grille 12.

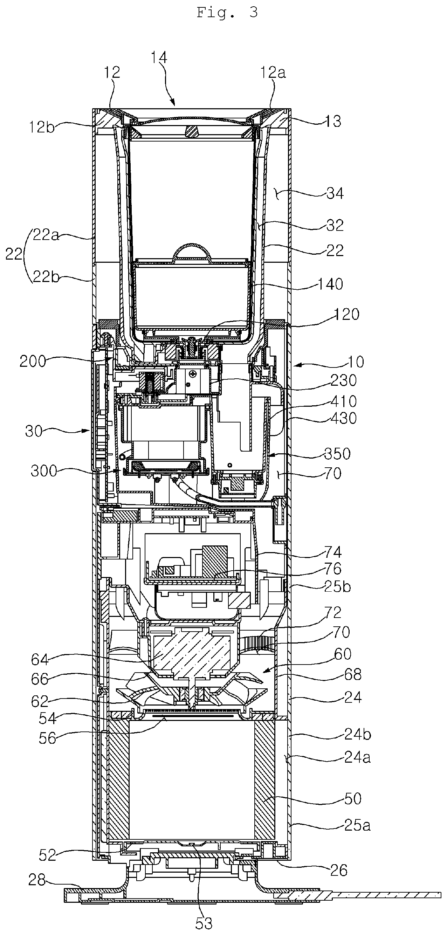

Hereinafter, an internal construction of the humidifier will be described with reference to FIG. 3.

The humidifier includes a filter unit positioned inside the casing 10, for filtering the air admitted into the inlets 24a. The humidifier includes a blower 60 positioned inside the casing 10, for moving the air inside the casing 10 from the inlets 24a to the outlets 12a. The humidifier includes a water tank 100 positioned inside the casing 10, for holding water. The humidifier includes a humidification module that generates humidified air from water supplied from the water tank 100.

The humidifier may include a base 28. The base 28 may cause the casing 10 to be spaced upward from the ground. The base 28 may be connected to a bottom wall 26 of the casing 10.

The casing 10 may include a bottom wall 26 which covers the bottom of the intake grille 24.

An upper end portion of the base 28 may be connected to the bottom wall 26. The bottom wall 26 may be positioned in such a way as to cover a bottom surface of the humidifier which is spaced upward from the ground by the base 28.

The intake grille 24 may cover the outsides of a filter 50 and a blower housing 68 to be described below. The intake grille 24 may have a plurality of inlets 24a that are vertically formed and circumferentially spaced apart. The inlets 24a may be formed around where the filter 50 is placed. The inlets 24a may be formed in a lower portion of the intake grille 24. The lower portion of the intake grille 24 may be formed with inlets 24a, and an upper portion of the intake grille 24 may be enclosed to protect the internal construction of the humidifier.

The outer shell 22 may be positioned over the intake grille 24.

The filter unit may allow the air admitted through the inlets 24a to be filtered through the filter 50. The filter unit may allow the filtered air to move upward.

The filter unit includes a filter 50 for filtering the air admitted through the inlets 24a and a filter mounting portion for fixing the filter 50 in place inside the casing 10.

The filter 50 may be cylindrical. Thus, the filter 50 is able to filter air drawn in from longitudinal and lateral directions perpendicular to the vertical direction. The air admitted through the inlets 24a may move to an inside space of the filter 50. The air passed through the filter 50 may move to the blower 60 positioned over the filter 50.

The filter mounting portion includes a lower plate 52 positioned on a lower side of the filter 50, an upper plate 54 positioned on an upper side of the filter 50, and a supporter (not shown) connecting the lower plate 52 and the upper plate 54.

The lower plate 52 is disposed on a lower side of the filter 50. The lower plate 52 may move up and down and detect whether the filter 50 is placed. A fan sterilizer 53 may be positioned in the center of the lower plate 52 to emit ultraviolet light upward.

The fan sterilizer 53 may sterilize a blower fan 62 to be described below or the inside of the filter 50.

An orifice 56 is formed in the upper plate 54. The orifice 56 may be formed in the center of the upper plate 54. The orifice 56 may allow the air admitted to the inside of the filter 50 to move to the blower fan 62. An inner circumferential end of the upper plate 54 may be bent upward so as to guide the upward movement of air in the inside space of the filter 50 to the blower fan 62.

The supporter may connect the lower plate 52 and the upper plate 54. The supporter may be circumferentially spaced apart.

The blower 60 includes a blower fan 62 that forms an air flow within the casing 10 and a fan motor 64 that rotates the blower fan 62.

The blower fan 62 may have a fan intake opening on one side facing the orifice 56 and a fan discharge opening on the opposite side of the fan intake opening. The blower fan 62 may be a diagonal flow fan in which the fan discharge opening on the opposite side of the fan intake opening faces in a centrifugal direction. The blower fan 62 may include a hub connected to the fan motor 64, a shroud spaced apart from the hub by a certain distance and forming the fan intake opening, and a blade extending radially to connect the hub and the shroud.

The blower fan 62 may be activated to send air upward from below. The blower fan 62 may draw air toward the orifice 56 and discharge air to the blower housing 68 where a diffuser 72 is placed.

The fan motor 64 may be positioned over the blower fan 62.

The blower includes a motor cover 66 that covers the outside of the fan motor 64, and a blower housing 68 spaced radially outward from the motor cover 66, that guides the upward movement of air blown by the blower fan 62.

A blower channel 70 along which the air blown by the blower fan 62 moves upward may be formed between the motor cover 66 and the blower housing 68. The blower channel 70 may extend as far as where a humidification module housing 410 and a channel housing 430 are formed.

The intake grille 24 may be positioned on the outside of the blower housing 68.

The blower 60 includes a diffuser 72 positioned between the motor cover 66 and the blower housing 68, that reduces rotational components of the air blown upward by the blower fan 62. A plurality of diffusers 72 may be circumferentially spaced apart.

A control box 74 forming a space within which a circuit board 76 is placed may be positioned over the motor cover 66. The control box 74 may be spaced apart inwardly from the blower housing 68. Thus, the blower channel 70 may be formed in the space between the control box 74 and the blower housing 68 as well.

A plurality of circuit boards 76 may be placed within the control box 74. The humidification module includes a first humidification reservoir 300 which heats water. The humidification module includes a second humidification reservoir 350 which generates humidified air from water. The humidification module may include a humidification module housing 410 which covers the peripheries of the first humidification reservoir 300 and the second humidification reservoir 350. The channel housing 430 may be positioned around the outer periphery of the humidification module housing 410. The blower channel 70 may be formed between the humidification module housing 410 and the channel housing 430.

The humidifier includes a water tank 100 forming a space in which water is held, an inner shell 180 forming a space in which the water tank 100 is placed, and a middle tray 200 positioned under the inner shell 180.

The water tank 100 may have an inner tank 102 placed inside an outer tank 160. The water tank 100 includes an inner tank 102 forming a space where water is held and having a bottom hole on a bottom surface and an outer tank 160 forming a space where the inner tank is accommodated.

The connector 120 connecting the inner tank 102 and the supply pipe 230 may be positioned to penetrate the outer tank 160.

The outer tank 160, while placed inside the inner shell 180, may be positioned over the middle tray 200. The middle tray 200 may be a structure that supports the inner shell 180, the outer tank 160, and the inner tank 102. Thus, the weights of the inner tank 102, the outer tank 160, and the inner shell 180 may be transferred to the middle tray 200.

The outer tank 160 is placed around the outer periphery of the inner tank 102.

The inner tank 102 may be placed inside the outer tank 160. When the inner tank 102 is placed inside the outer tank 160, an outer circumferential surface of the inner tank 102 may be positioned in such a way as to make contact with an inner circumferential surface of the outer tank 160.

The humidifier includes a water softener 140 placed within the inner tank 102.

The water softener 140 is placed inside the inner tank 102. The water softener 140 may be fixed in place as it is connected to the connector 120 placed inside the inner tank 102.

The inner shell 180 is spaced apart from the outer tank 160. The inner shell 180 is spaced apart from the water tank 100. A first discharge passage 32 along which humidified air moves is formed between the inner shell 180 and the outer tank 160.

A second discharge passage 34 is formed between the outer shell 22 and the inner shell 180.

The inner shell 180 and the outer shell 22 are spaced apart from each other and form the second discharge passage 34. Filtered clean air blown by the blower 60 may move along the second discharge passage 34.

The discharge grille 12 may be positioned over the first discharge passage 32 and the second discharge passage 34 which will be described below.

The discharge grille 12 may be vertically elevated on one end to a certain height. Thus, a mixture passage 13 may be formed between the plurality of ribs 12b of the discharge grille 12. In the mixture passage 13, the air moving through the first discharge passage 32 and the air moving through the second discharge passage 34 may be mixed together.

The plurality of ribs 12b may be formed in such a way that outer peripheral ends thereof are positioned higher than inner peripheral ends thereof. Thus, the air moving through the first discharge passage 32 and the second discharge passage 34 may be guided radially inwardly.

A display 30 is disposed on one side of the casing 10. The display 30 allows the user to control the power or operation of the humidifier. The display 30 may be a display that shows the operating status or the like of the humidifier to the user.

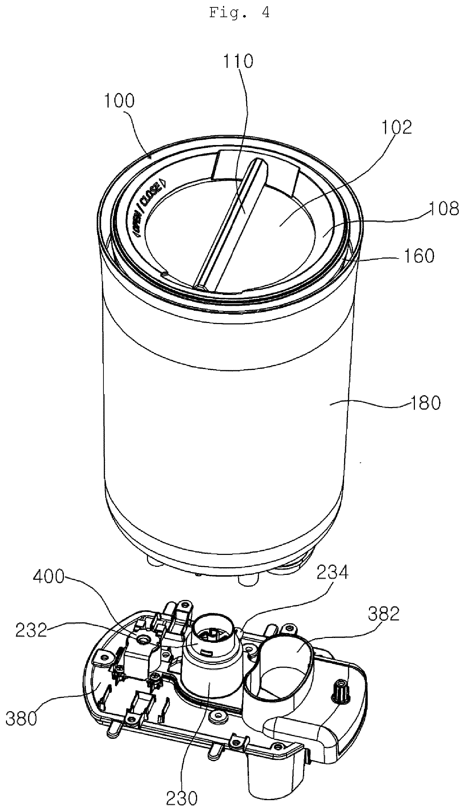

Referring to FIG. 4, the water tank and the supply pipe and the upper cover, which are positioned under the water tank, will be described.

The water tank 100 includes an inner tank 102 and an outer tank 160 positioned on the outer periphery of the inner tank 102. The inner shell 180 is disposed on the outer periphery of the water tank 100.

The inner shell 102 is positioned inside the outer tank 160. The inner tank 102 may be positioned on the inside of the outer tank 160. When the inner tank 102 is disposed on the inside of the outer tank 160, the outer circumferential surface of the inner tank 102 may be positioned in such a way as to make contact with the inner circumferential surface of the outer tank 160.

The water tank 100 includes a handle 108 positioned at an upper part of the inner tank 102. The handle 108 includes a handle bar 110 positioned across the open top side of the inner tank 102.

The humidified air includes a supply pipe 230 which supplies the water held in the water tank 100 to the first humidification reservoir 300. The supply pipe 230 is positioned between the water tank 100 and the first humidification reservoir 300. The supply pipe 230 may temporarily store the water released from the water tank 100 and supplied to the first humidification reservoir 300.

The supply pipe 230 may have a supply chamber that temporarily stores water. A detection sensor 234 may be positioned on one side of the supply pipe 230 to detect the hardness of the water stored therein.

The supply pipe 230 includes an inlet port 232 connected to the connector 120. The inlet port 232 protrudes upward from the top of the supply pipe 230. The inlet port 232 may be connected to the connector 120 positioned within the inner tank 102 which will be described later.

The humidifier includes an upper cover 380 positioned on an upper side of the first humidification reservoir 300 or the second humidification reservoir 350.

A first valve 400 is disposed on one side of the upper cover 380 to send the water in the supply pipe 230 to the first humidification reservoir 300. An exhaust tube 382 along which humidified air generated in the second humidification reservoir 350 moves is disposed on the upper cover 380.

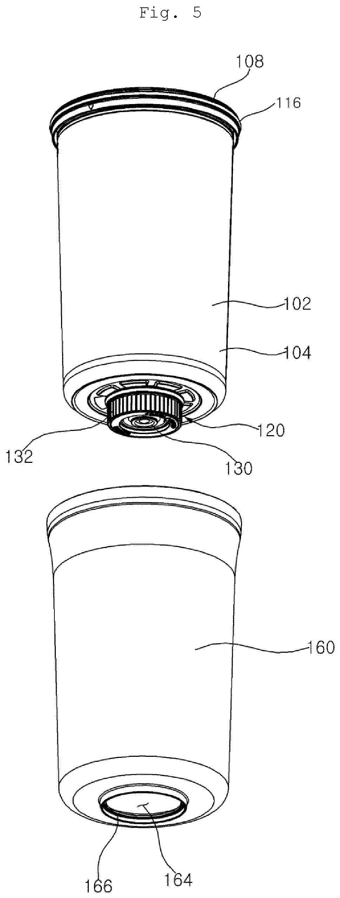

Referring to FIG. 5, the inner tank, the outer tank, and the connector will be described.

The water tank 100 includes an inner tank 102 and an outer tank 160 positioned outside the inner tank. The inner tank 102 forms a space inside where water is held. The outer tank 160 forms a space inside where the inner tank 102 is accommodated.

A water tank sealer 116 is disposed on an upper end portion of the inner tank 102. The water tank sealer 116 is disposed on an outer circumferential surface of the inner tank 102 and positioned in such a way as to make contact with an inner circumferential surface of the outer tank 160.

The outer tank 160 has a through-hole 164 formed through a bottom surface, for the connector 120 to penetrate.

The outer tank 160 includes a lower rim 166 protruding downward from the bottom surface. The lower rim 166 has a structure that protrudes downward from the periphery of the through-hole 164. The lower rim 166 may have a ring-shaped structure.

The inner tank 102 includes an inner tank body 104 forming a space where water is held and a handle 108 positioned on the top side of the inner tank body 104.

The humidifier includes a connector 120 positioned in such a way as to be fixed to the inner tank 102 and connecting the inner tank 102 and the supply pipe 230. Part of the construction of the connector 120 is positioned inside the inner tank 102. The rest of the construction of the connector 120 is positioned outside the inner tank 102.

The connector 120 may send the water held in the inner tank 102 to the humidification module. The connector 120 may send the water held in the inner tank 102 to the humidification module through the supply pipe 230.

A connector holder 132 of the connector 120 and part of the connector valve 130 may be positioned outside the inner tank 102. The connector holder 132 and the connector valve 130 each may be connected to the inlet port 232 of the supply pipe 230.

The connector holder 132 and part of the connector valve 130 may protrude downward from the outer tank 160 via the through-hole 164 of the outer tank 160.

When the inner tank 102 is accommodated in the outer tank 160, the connector holder 132 and part of the connector valve 130 may be positioned under the outer tank 160.

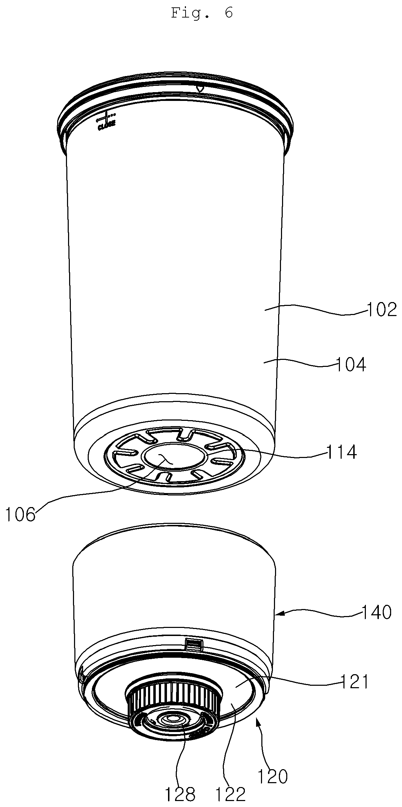

Referring to FIG. 6, the inner tank, the water softener, and the connector will be described.

A bottom hole 106 which part of the construction of the connector 120 penetrates is formed through a bottom surface of the inner tank 102.

The bottom surface of the inner tank 102 may be formed to increase strength.

A packing 114 may be positioned around the bottom hole 106 of the inner tank 102. The packing 114 may create a tight seal between the connector 120 and the inner tank 102.

The humidifier includes a water softener 140 positioned within the inner tank 102 and a connector 120 positioned under the water softener 140 and tightly attached to the inner tank 102.

The water softener 140 is positioned within the inner tank 102. Thus, it may be held in an inside space of the inner tank 102 to remove ions from the water moving to the humidification module.

The water softener 140 may have a hole formed through each of the top and bottom surfaces to allow water to move through.

The connector 120 is positioned under the water softener 140. The connector 120 may have a structure that is coupled to the water softener 140.

The connector 120 includes a connector body 121 positioned to penetrate the bottom hole 106 of the inner tank body 104, a connector holder 132 coupled to the connector body 121, for fixing the connector body 121 in place, and a connector valve 130 positioned inside the connector body 121, for opening and closing an internal passage of the connector body 121.

The connector body 121 includes a connector plate 122 positioned under the water softener 140 and a connector pipe 128 extending downward from the connector plate 122.

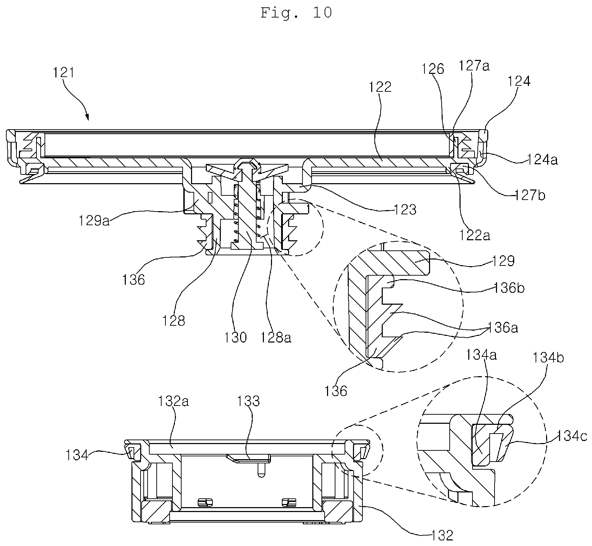

The connector plate 122 is positioned inside the inner tank body 104. The connector pipe 128 is positioned to penetrate the bottom hole 106 of the inner tank body 104 and forms an internal passage 128a (see FIG. 10) inside it.

The connector plate 122 is positioned over the bottom surface of the inner tank body 104. The connector plate 122 may have a structure in which it contacts the bottom of the water softener 140 and fixes the water softener 140 in place.

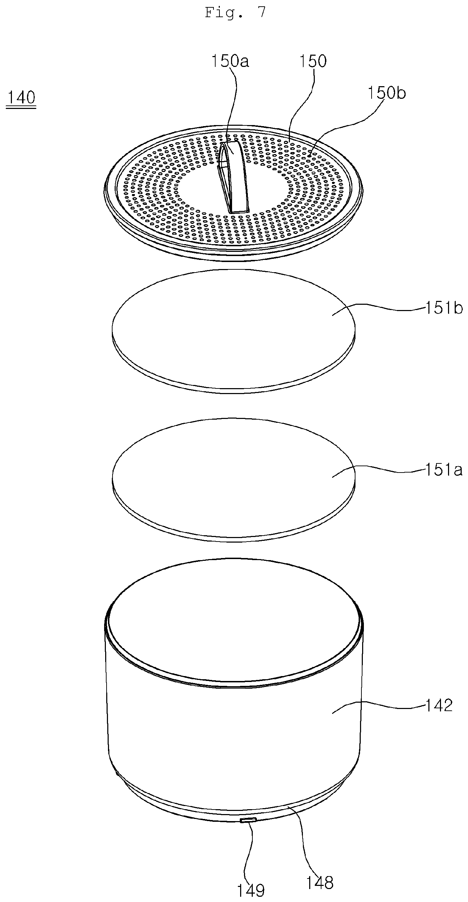

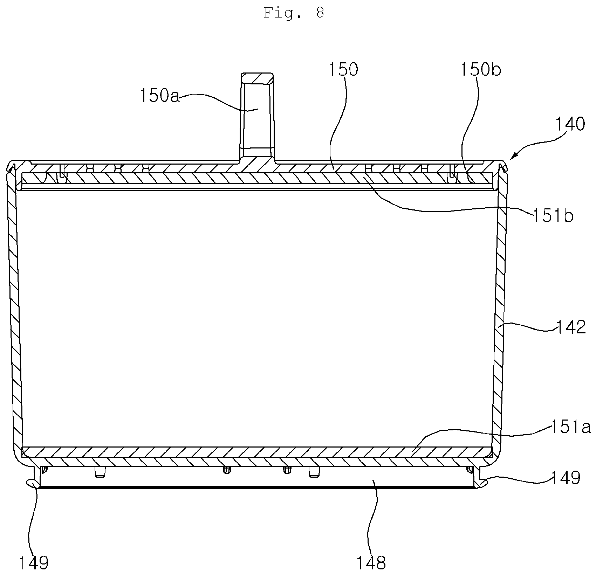

Referring to FIGS. 7 and 8, the water softener will be described.

The water softener 140 may be positioned in such a way as to be fixed to the inside of the inner tank 102. The water softener 140 may contain ion-exchange resins (not shown) inside, for removing ions from the water admitted to the inner tank 102.

The water softener 140 has a plurality of holes formed through each of the top and bottom surfaces, for water to move through. The water softener 140 allows the water admitted through the hole 150b formed through the top side to make contact and react with the ion-exchange resins, and sends the water admitted into the water softener 140 via a hole (not shown) formed through the bottom surface.

The water softener 140 includes a water softener casing which internally forms a space and has a plurality of holes formed through the upper surface and the bottom surface.

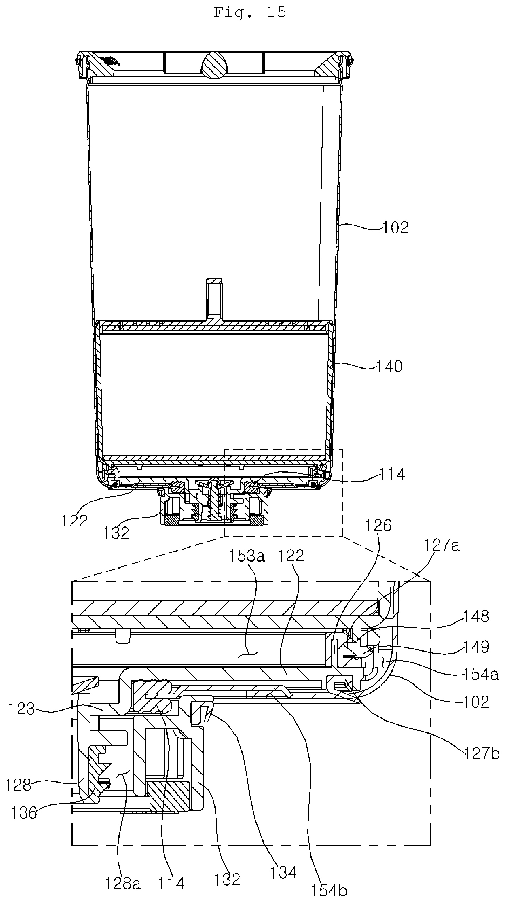

The plurality of holes formed through the bottom surface of the water softener casing are formed within an area where an upper sealer 127a (see FIG. 15) to be described later is placed. The plurality of holes formed through the bottom surface of the water softener 140 are positioned inside an area of contact with the upper sealer 127a.

The water softener casing may include a water softener housing 142 and a housing cover 150 which will be described later.

Ion-exchange resins are placed within the water softener casing. The ion-exchange resins may remove ions present in water. The ion-exchange resins may reduce water hardness by removing ions present in water.

The water softener 140 includes a water softener housing 142 forming a space inside where ion-exchange resins (not shown) are placed, and a housing cover 150 positioned over the water softener housing 142.

The water softener housing 142 forms a space inside where ion-exchange resins are placed. The water softener housing 142 may be open on the top side.

The water softener housing 142 may include a lower protrusion 148 protruding downward from the bottom surface.

The lower protrusion 148 protrudes downward from the bottom surface of the water softener housing 142. The lower protrusion 148 may cause the water softener 140 positioned over the connector 120 to be spaced a certain distance apart from the connector 120.

A hook 149 may be positioned on an outer circumferential surface of the lower protrusion 148, for connecting the water softener 140 to the connector 120. A plurality of hooks 149 may be positioned on the outer circumferential surface of the lower protrusion 148, spaced apart circumferentially.

A housing handle 150a is disposed on top of the housing cover 150, protruding upward.

The water softener 140 includes at least one inner filter 151a and 151b positioned within the water softener housing 142. The water softener 140 includes inner filters 151a and 151b positioned within the water softener casing, for absorbing and dispersing the water admitted into the water softener casing.

The inner filter 151b is positioned under the top surface of the water softener casing. The inner filter 151a is positioned over the bottom surface of the water softener casing.

The inner filters 151a and 151b may be formed of a material of a certain thickness that absorbs water. A mesh filter is disposed on each of the top and bottom surfaces of the water softener casing.

The mesh filter may prevent the ion-exchange resins from leaking out of the water softener 140.

The thickness of the inner filters 151a and 151b is larger than the thickness of the mesh filter.

The inner filter includes an upper inner filter 151b positioned in an upper part of the water softener casing and a lower inner filter 151a positioned in a lower part of the water softener casing.

The water softener 140 includes a plurality of inner filters 151a and 151b positioned within the water softener 140. The water softener 140 includes a lower inner filter 151a positioned over the bottom surface of the water softener housing 142 and an upper inner filter 151b positioned under the housing cover 150.

The lower inner filter 151a and the upper inner filter 151b are positioned within the water softener 140, spaced apart vertically.

Ion-exchange resins may be placed between the lower inner filter 151a and the upper inner filter 151b. The lower inner filter 151a and the upper inner filter 151b may be sediment filters that keep the ion-exchange resins from being released out of the water softener 140.

Although not shown, a lower mesh filter may be positioned between the lower inner filter 151a and the bottom surface of the water softener housing 142. Also, an upper mesh filter may be positioned between the housing cover 150 and the upper inner filter 151b.

The lower mesh filter may have a structure that is inserted into the bottom surface of the water softener housing 142 and injection-molded. The upper mesh filter may have a structure that is inserted into the housing cover 150 and injection-molded.

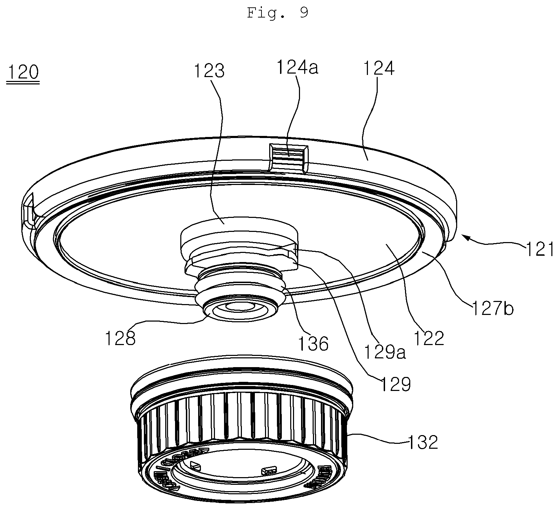

Referring to FIGS. 9 and 10, the connector will be described.

The connector 120 is positioned within the inner tank 102. The connector 120 is connected to the supply pipe 230.

The connector 120 is coupled to the water softener 140 positioned within the inner tank 102. The connector 120 may be connected to the water tank 100 and release the water held in the water tank 100 to the humidification module.

The connector 120 may include a connector body 121 and a connector holder 132.

The connector holder 132 is coupled to the bottom of the connector body 121. Part of the construction of the connector body 121 may be positioned within the inner tank 102. The connector holder 132 may be positioned under the inner tank 102.

The rest of the construction of the connector body 121 positioned outside the inner tank 102 may be coupled to the connector holder 132. When the connector holder 132 is coupled to the connector body 121, the packing 114 positioned on the inner tank 102 and the connector body 121 may be tightly attached.

The connector body 121 may include a connector plate 122 and a connector pipe 128 extending downward from the connector plate 122. The connector pipe 128 has a structure that protrudes downward from the connector plate 122. The connector valve 130 is disposed on the internal passage 128a formed inside the connector pipe 128.

The connector body 121 includes a lower protrusion 123 protruding downward from the connector plate 122. The lower protrusion 123 has a structure that protrudes downward from the connector plate 122. The lower protrusion 123 may have a larger diameter than the connector pipe 128. The lower protrusion 123 may be positioned over the connector pipe 128.

An outer circumferential surface of the lower protrusion 123 may make contact with the packing 114 positioned on the inner tank 102.

A pipe projection 129 is disposed on the outer periphery of the connector pipe 128. The pipe projection 129 may be positioned under a holder projection 133 of the connector holder 132, whereby the connector body 121 and the connector holder 132 may be fixed.

The pipe projection 129 is spaced a certain distance apart downward from the lower protrusion 123.

A projection stopper 129a connecting one end portion of the pipe projection 129 and the lower protrusion 123 is disposed on the outer periphery of the connector pipe 128. The projection stopper 129a may be formed vertically. The projection stopper 129a may restrict the movement of the holder projection 133.

An inner sealer 136 is positioned around the outer periphery of the connector pipe 128. When the connector 120 is placed above the supply pipe 230 to be described later, the inner sealer 136 may seal the gap between the connector 120 and the supply pipe 230. The inner sealer 136 may be positioned under the pipe projection 129.

The inner sealer 136 may be formed of a rubber material that can change its configuration. The inner sealer 136 is positioned in such a way as to make contact with the outer periphery of the connector pipe 128. An outwardly protruding part may be formed on a lower end of the connector pipe 128 so as to keep the inner sealer 136 from moving downward.

The inner sealer 136 includes a sealing projection 136a which protrudes outward. The inner sealer 136 includes a plurality of sealing projections 136a which protrude outward and are vertically spaced apart.

The sealing projection 136a may be formed to have a larger diameter toward the top. In a cross-sectional view, the sealing projection 136a may have the shape of a triangle whose top face has a large area.

The diameter of an outer peripheral edge of the sealing projection 136a may be larger than the diameter of an inner circumferential surface of an inlet port 232 of the supply pipe 230.

The inner sealer 136 includes an upper end projection 136b which is positioned above the sealing projection 136a and protrudes radially outward. The upper end projection 136b may make contact with an upper end portion of the inlet port 232 of the supply pipe 230.

An edge wall 124 may be positioned on the connector plate 122, protruding upward from an outer peripheral end of the connector plate 122. The edge wall 124 may have a hook hole 124a for the hook 149 of the water softener 140 to be inserted through.

A fixing rib 126 may be positioned on the connector plate 122, protruding upward and radially spaced apart from the edge wall 124. The fixing rib 126 is positioned inside the edge wall 124. The upper sealer 127a may be positioned on the fixing rib 126. The lower protrusion 148 of the water softener 140 may be positioned between the fixing rib 126 and the edge wall 124.

The upper sealer 127a may be positioned on the fixing rib 126 and make contact with the lower protrusion 148 of the water softener 140. The upper sealer 127a may seal the gap between the fixing rib 126 and the lower protrusion 148.

The upper sealer 127a includes a plurality of sealing portions 127a1 which protrude outward and make contact with the lower protrusion and are vertically spaced apart.

A lower sealer 127b is disposed on the bottom surface of the connector plate 122. The lower sealer 127b may be positioned in such a way as to make contact with the bottom surface of the inner tank 102. A sealer recess 122a is formed on the bottom surface of the connector plate 122, recessed upwardly such that the lower sealer 127b is placed therein.

The connector holder 132 is positioned in such a way as to be fixed to the outer periphery of the connector pipe 128. The connector holder 132 may be positioned under the bottom surface of the inner tank body 104. The bottom surface of the inner tank 102 is positioned between the connector holder 132 and the connector plate 122.

The packing 114 is positioned between the connector holder 132 and the connector plate 122. When the connector holder 132 is coupled to the connector pipe 128, the connector plate 122 is tightly attached to the packing 114.

The holder projection 133 is positioned in such a way as to protrude from an inner circumferential surface of the connector holder 132. The connector pipe 128 of the connector body 121 may be inserted into a space formed by the inner circumferential surface of the connector holder 132.

An outer sealer 134 is disposed on an outer circumferential surface of the connector holder 132. The outer sealer 134 is positioned in such a way as to protrude radially outward than the periphery of the connector holder 132.

The outer sealer 134 is disposed on the outer circumferential surface of the connector holder 132. The outer sealer 134 includes a contact portion 134a making contact with the connector holder 132, a protrusion 134b protruding radially outward from an upper end of the contact portion 134a, and a sealing portion 134c extending downward from an outer peripheral end of the protruding portion 134b. The sealing portion 134c is positioned in such a way as to be bent downward from the outer peripheral end of the protrusion 134b. The sealing portion 134c may make contact with the outer tank 160. When the inner tank 102 is positioned within the outer tank 160, the sealing portion 134c may make contact with one side of the outer tank 160.

The outer sealer 134 may be positioned in such a way as to make contact with the outer tank 160 positioned outside the connector holder 132. The outer sealer 134 may be positioned in such a way as to make contact with the inner shell 180 positioned outside the connector holder 132.

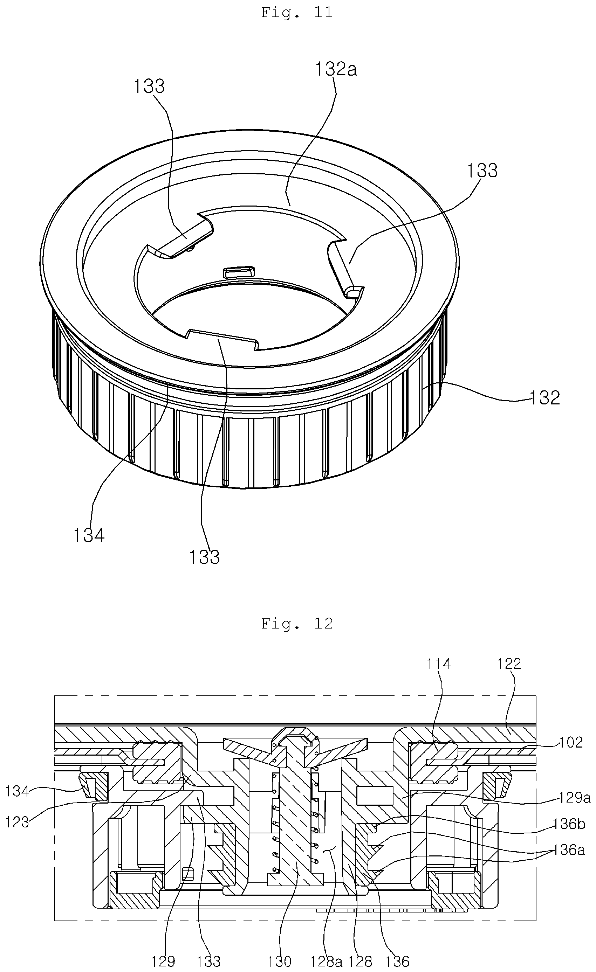

Referring to FIGS. 11 and 12, the construction of the connector holder according to a first embodiment and the connection between the connector holder and the connector body will be described.

A central portion of the connector holder 132 may be vertically perforated.

The connector holder 132 includes a seating portion 132a which is recessed downwardly from the upper surface. The inner tank 102 may be positioned over the seating portion 132a. The packing 114 positioned on the inner tank 102 may be positioned over the seating portion 132a.

The packing 114 may be positioned in such a way as to make contact with the seating portion 132a. The packing 114 may be positioned in such a way as to make contact with the lower protrusion 123 of the connector body 121.

The connector holder 132 includes a holder projection 133 protruding inwardly from the inner circumferential surface. The connector holder 132 includes a plurality of holder projections 133 spaced circumferentially apart from the inner circumferential surface.

When the connector holder 132 is fitted onto the connector body 121, the holder projection 133 is positioned over the pipe projection 129. The holder projection 133 is positioned between the pipe projection 129 and the lower protrusion 123.

The holder projection 133 may remain positioned over the pipe projection 129 by the projection stopper 129a positioned on one side of the pipe projection 129.

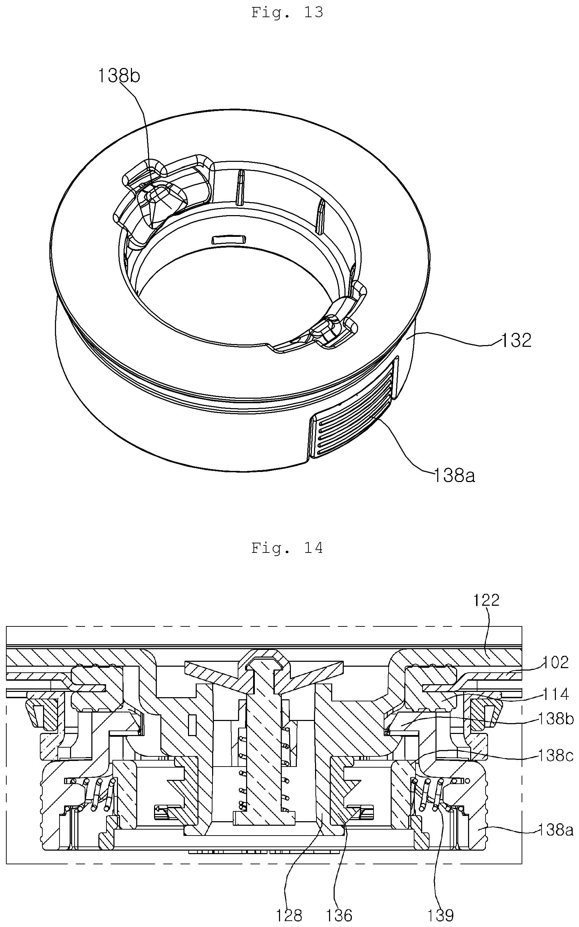

Referring to FIGS. 13 and 14, the construction of the connector holder according to a second embodiment and the connection between the connector holder and the connector body will be described.

The connector holder 132 may be hooked to the connector body 121.

A holder button 138a and a holder hook 138b are positioned on the connector holder 132. When the holder button 138a is pressed, the position of the holder hook 138b may be changed.

The holder button 138a may be positioned on the outer circumferential surface of the connector holder 132. A pair of holder buttons 138a positioned on opposite sides are positioned on the outer circumferential surface of the connector holder 132.

The holder hook 138b is positioned in such a way as to protrude inwardly from the inner circumferential surface of the connector holder 132.

If the holder button 138a is not pressed, the holder hook 138b is positioned in such a way as to protrude from the inner circumferential surface of the connector holder 132. When the holder button 138a is pressed, the holder hook 138b is placed within the connector holder 132.

A spring 139 for restoring the position of the holder button 138a is positioned within the connector holder 132. The holder button 138a and the holder hook 138b may be formed integrally.

A holder contact portion 138c which contacts the inside of the connector holder 132 is positioned between the holder button 138a and the holder hook 138b.

The holder button 138a is positioned lower than the holder contact portion 138c, and the holder hook 138b is positioned higher than the holder contact portion 138c. The holder button 138a is positioned outward than the holder contact portion 138c, and the holder hook 138b is positioned inward than the holder contact portion 138c.

When the connector 132 is fitted onto the connector body 121, the holder hook 138b may be positioned over the pipe projection 129. Thus, the connector holder 132 may be held in place.

Referring to FIG. 15, the connecting structure of the inner tank, the water softener, and the connector will be described.

The water softener 140 is positioned within the inner tank 102. Part of the construction of the connector 120 is positioned within the inner tank 102. Another part of the construction of the connector 120 is positioned to protrude out of the inner tank 102.

The packing 114 is disposed on a lower end portion of the inner tank 102. The packing 114 contacts the connector 120. The packing 114 may prevent the water in the inner tank 102 from flowing through an outer portion of the connector 120.

The packing 114 may be positioned in such a way as to make contact with the bottom of the connector plate 122. The packing 114 may be positioned in such a way as to make contact with the outer circumferential surface of the lower protrusion 123.

The upper sealer 127a of the connector 120 contacts the bottom surface of the water softener 140. The upper sealer 127a of the connector 120 may be positioned in such a way as to make contact with the lower protrusion 148 of the water softener 140. Thus, it is possible to prevent the water moving down via a housing hole formed through the bottom surface of the water softener 140 from flowing to an outer side of the lower protrusion 148.

The upper sealer 127a of the connector 120 may be positioned in such a way as to make contact with the bottom surface of the water softener 140 or the lower protrusion 148.

The upper sealer 127a allows the water that has passed through the water softener 140 to move to the supply pipe 230 through the connector pipe 128. The upper sealer 127a allows the water that has passed through the water softener 140 to flow out of the inner tank 102.

The lower sealer 127b of the connector 120 is positioned in such a way as to make contact with the bottom surface of the inner tank 102. The lower sealer 127b may keep the water that has not passed through the water softener 140 from flowing out of the inner tank 102.

A connecting space 153a is formed between the water softener 140 and the connector 120. The connecting space 153a connects the water softener 140 and the internal passage 128a of the connector pipe 128.

A peripheral space 154a and 154b may be formed between the connector 120 and the inner tank 102. An upper peripheral space 154a may be formed between the connector 120 and the periphery of the inner tank 102. A lower peripheral space 154b may be formed between the connector 120 and the bottom surface of the inner tank 102.

The upper sealer 127a seals the gap between the connecting space 153a and the upper peripheral space 154a. The lower sealer 127b seals the gap between the upper peripheral space 154a and the lower peripheral space 154b.

The packing 114 seals the outsides of the lower peripheral space 154b and the inner tank 102.

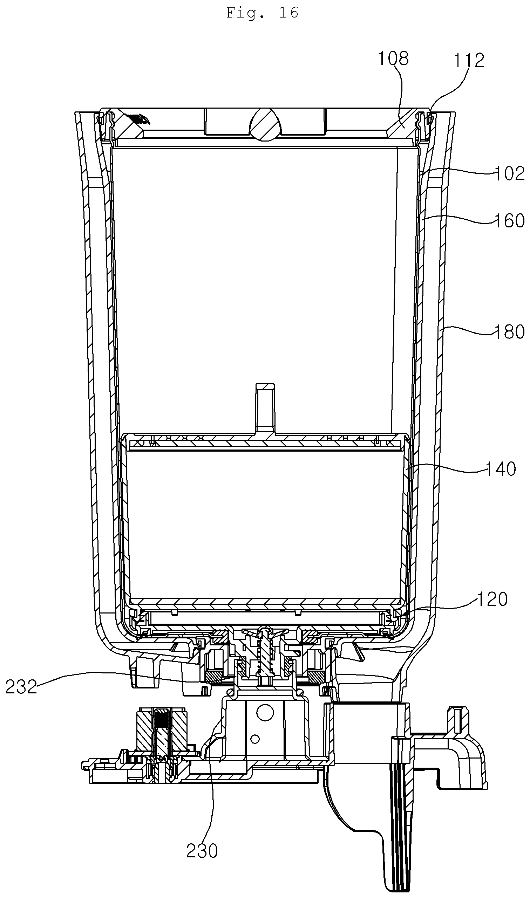

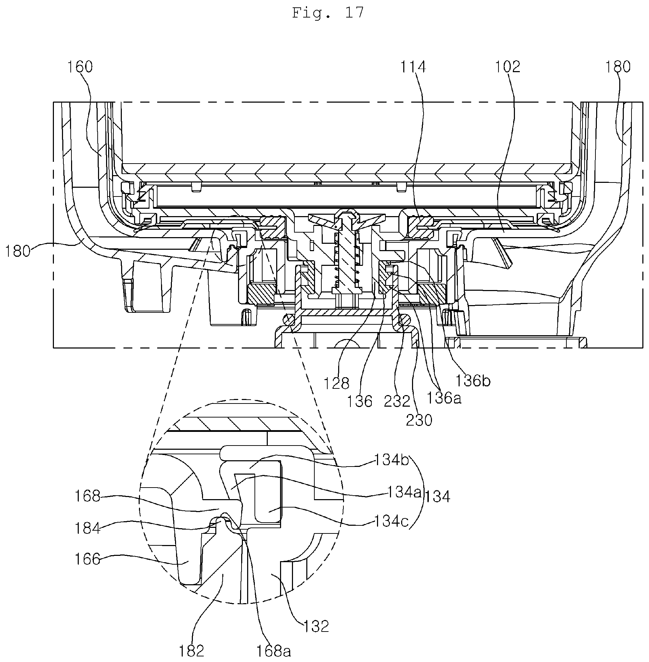

Referring to FIGS. 16 and 17, a structure for sealing when the outer tank, the inner shell, and the supply pipe are additionally placed and the connections between the components will be described.

The inner tank 102 is positioned within the outer tank 160. A handle sealer 112 positioned on the handle 108 of the inner tank 102 is positioned in such a way as to make contact with an upper end portion of the outer tank 160.

The inner tank 102 is positioned in such a way as to make contact with the outer tank 160. The outer tank 160 has a through-hole 164 formed through the bottom surface, for the connector 120 to penetrate. The outer tank 160 includes a lower rim 166 protruding downward from a lower surface thereof.

An inner protrusion 168 is disposed on an inner circumferential surface of the lower rim 166, protruding inward. The inner protrusion 168 is positioned in such a way as to make contact with the outer sealer 134 of the connector holder 132. The inner protrusion 168 is positioned over the upper rim 182 of the inner shell 180.

The inner protrusion 168 is positioned in such a way as to make contact with the inner shell 180. The inner protrusion 168 is positioned in such a way as to make contact with the upper rim 182.

A bottom recess 168a may be formed on a bottom surface of the inner protrusion 168, recessed upwardly. A tip 184 may be formed on an upper end portion of the upper rim 182, protruding upward. The tip 184 of the upper rim 182 may be inserted into the bottom recess 168a of the inner protrusion 168.

The inner shell 180 is placed around the periphery of the outer tank 160. The outer tank 160 and the inner shell 180 are spaced apart from each other. The first discharge passage 32 is formed between the outer tank 160 and the inner shell 180.

A shell through-hole 186 is formed in a bottom surface of the inner shell 180 such that part of the connector 120 is placed therein. The shell through-hole 186 is formed under the through-hole 164 of the outer tank 160. The inner shell 180 includes an upper rim 182 protruding upward from where the shell through-hole 186 is formed.

The upper rim 182 is positioned inside the lower rim 166. An upper end of the upper rim 182 contacts the inner protrusion 168 which protrudes from an inner circumferential surface of the lower rim 166.

The outer sealer 134 positioned on the outer circumferential surface of the connector holder 132 is positioned in such a way as to make contact with the inner protrusion 168 of the outer tank 160. The outer sealer 134 may be positioned in such a way as to make contact with the upper rim 182 of the inner shell 180.

The outer sealer 134 may seal the gap between the first discharge passage 32 and the inner tank 102. The sealing portion 134c of the outer tank 160 contacts the inner protrusion 168 of the outer tank 160.

Part of the construction of the connector 120 protrudes outward from the outer tank 160.

A bottom part of the connector 120 is connected to the inlet port 232 of the supply pipe 230. The inner sealer 136 positioned on the outer circumferential surface of the connector pipe 128 contacts the inner circumferential surface of the inlet port 232. The plurality of sealing projections 136a of the inner sealer 136 may make contact with the inner circumferential surface of the inlet port 232.

The inner sealer 136 and the inlet port 232 may overlap 0.3 to 0.7 mm around the entire perimeter. The diameter of an outer peripheral edge of the inner sealer 136 may be 0.3 to 0.7 mm larger than the diameter of an inner peripheral edge of the inlet port 232.

## Claims

1. A humidifier comprising:
an inner tank (102) forming a space for storing water and having a bottom hole (106) formed through a bottom surface thereof;
an outer tank (160) forming a space for receiving the inner tank (102);
a humidification module (300, 350) that generates humidified air using water supplied from the inner tank (102); and
a connector (120) for sending the water stored in the inner tank (102) to the humidification module (300, 350),
wherein the connector (120) includes:
a connector body (121) penetrating the bottom hole (106) of the inner tank (102); and
a connector holder (132) connected to the connector body (121) below the inner tank (102),
wherein a through-hole (164) is formed in a bottom surface of the outer tank (160), in which the connector holder (132) is disposed, and
wherein an outer sealer (134) contacting the outer tank (160) is disposed on an outer circumferential surface of the connector holder (132).

2. The humidifier of claim 1, wherein the outer tank (160) includes a lower rim (166) extending downward around the through-hole (164), and the outer sealer (134) contacts the lower rim (166).

3. The humidifier of claim 2, wherein the outer tank (160) includes an inner protrusion (168) protruding inward from an inner circumferential surface of the lower rim (166), and the outer sealer (134) contacts the inner protrusion (168).

4. The humidifier of any one of claims 1 to 3, wherein the outer sealer (134) includes:
a contact portion (134a) disposed in contact with the outer circumferential surface of the connector holder (132);
a protrusion (134b) protruding radially outward from an upper end of the contact portion (134a); and
a sealing portion (134c) bent downward from an outer peripheral end of the protrusion (134b),
wherein the sealing portion (134c) contacts the outer tank (160).

5. The humidifier of any one of claims 1 to 4, wherein a packing (114) is disposed around the bottom hole (106) formed on the bottom surface of the inner tank (102), the connector body (121) penetrates the bottom hole (106), and
wherein the packing (114) contacts one side of the connector body (121).

6. The humidifier of claim 5, further comprising a water softener (140) positioned within the inner tank (102),
wherein the connector body (121) includes:
a connector plate (122) coupled to the water softener (140); and
a connector pipe (128) extending downward from the connector plate (122) and penetrating the bottom hole (106) of the inner tank (102), and
wherein the connector holder (132) is fitted onto the connector pipe (128).

7. The humidifier of claim 6, wherein the packing (114) contacts a bottom surface of the connector plate (122).

8. The humidifier of claim 6, or 7, wherein the packing (114) contacts an upper surface of the connector holder (132).

9. The humidifier of claim 6, 7, or 8, wherein the connector holder (132) includes a seating portion (132a) which is recessed downwardly from the upper surface, and the packing (114) is disposed on the seating portion (132a).

10. The humidifier of any one of claims 1 to 9, further comprising an inner shell (180) disposed spaced apart from the outer tank (160),
wherein a discharge passage (32) is formed between the outer tank (160) and the inner shell (180), through which humidified air generated from the humidification module (300, 350) flows.

11. The humidifier of claim 10, wherein the outer tank (160) includes a lower rim (166) extending downward around the through-hole (164), and
the inner shell (180) includes an upper rim (182) protruding upward around a shell through-hole (186) through which the connector holder (132) penetrates,
wherein the upper rim (182) is positioned inside the lower rim (166).

12. The humidifier of claim 11, wherein the outer tank (160) includes an inner protrusion (168) protruding inward from an inner circumferential surface of the lower rim (166), and
wherein an upper end of the upper rim (182) contacts the inner protrusion (168).

13. The humidifier of claim 12, wherein a bottom recess (168a) is formed on a bottom surface of the inner protrusion (168), recessed upwardly such that an upper end portion of the upper rim (182) is inserted therein, wherein a tip (184) protruding upward is formed on the upper end portion of the upper rim (182) so as to be inserted in the bottom recess (168a).

14. The humidifier of claim 11, 12, or 13, wherein an outer circumferential surface of the upper rim (182) contacts the inner circumferential surface of the lower rim (166).

15. The humidifier of any one of claims 1 to 14, wherein a water tank sealer (116) that contacts the outer tank (160) is disposed at an upper end portion of the inner tank (102).
